# EUROPEAN PATENT SPECIFICATION

(11) **EP 0 858 191 B1**
(45) Date of publication and mention of the grant of the patent: **11.07.2007**
(21) Application number: 98102180.1
(22) Date of filing: 09.02.1998
(51) Int. Cl.: H04L 12/56, H04L 1/18, H04L 29/06

(54) **Method and apparatus for querying for missed messages in a radio communication system**
Verfahren und Vorrichtung zur Suche von Fehlnachrichten in einem Radiokommunikatonssystem
Méthode et dispositif pour chercher des messages manquant dans un système de communication radio

(30) Priority: 10.02.1997 US 797143
(43) Date of publication of application: 12.08.1998
(73) Proprietor: MOTOROLA, INC., Schaumburg, IL 60196 (US)
(72) Inventor: Dorenbosch, Jheroen P., Paradise, Texas 75165 (US); Cannon, Gregory Lewis, Keller, Texas 76248 (US)
(74) Representative: Cross, Rupert Edward Blount

(56) References cited:
- US-A- 5 553 083
- US-A- 5 577 046

## Description

### Field of the Invention

This invention relates in general to radio communication systems, and more specifically to a radio communication system in which it can be determined whether a message has been missed.

### Background of the Invention

In conventional radio communication systems, messages are transmitted to portable messaging units carried by system subscribers. When a communication system supports two-way communications, messages are provided to portable messaging units over a forward communication channel, and inbound messages, such as acknowledgments of message reception, are transmitted by the portable messaging units over a reverse communication channel for processing by a system controller see also US-A-5 577 046. The reception of a message acknowledgment by the system controller generally indicates that the corresponding message was properly received by the recipient portable messaging unit.

Acknowledgments are not always received, however, for various reasons, such as when the portable messaging unit is within the system but out of range of system receivers, when the portable messaging unit is outside the geographic boundaries of the system, or when the portable messaging unit is turned off or operating incorrectly. Outbound messages can sometimes be received by the portable messaging unit during times when acknowledgments are not provided, but the system controller will not know which of the transmitted messages have been successfully received. Therefore, a reconciliation process can occur when the portable messaging unit is once again able to make inbound transmissions to the system controller.

In one conventional system, when the portable messaging unit is again transmitting inbound communications, the system controller automatically retransmits each previously transmitted message for which an acknowledgment was not received. Although this reconciliation process is effective, it is inefficient since it unnecessarily crowds the outbound channel by retransmitting messages that have already been received by the portable messaging unit.

In another conventional system, the system controller queries for missed messages by transmitting, one at a time, the message number associated with each unacknowledged message. After each transmission of a message number, the system controller awaits a response from the portable messaging unit regarding the message associated with the particular message number. After the system controller has received the response, the system controller transmits the message number of a next unacknowledged message is transmitted and waits for a response related to this message number. This process continues until the system controller has separately queried for each unacknowledged message individually. This reconciliation method prevents retransmission of messages that have been previously received by the portable messaging unit, but system resources are even more inefficiently used since both the forward and reverse channels are needlessly crowded.

Thus, what is needed is a more efficient way to query for missed messages in a radio communication system.

### Brief Description of the Drawings

FIG. 1 is a block diagram of a radio communication system in accordance with the present invention.
FIG. 2 is an electrical block diagram of a system controller included in the radio communication system of FIG. 1 in accordance with the present invention.
FIG. 3 is a flowchart illustrating an operation of a query element included in the system controller of FIG. 2 in accordance with the present invention.
FIG. 4 is an electrical block diagram of a portable messaging unit included in the radio communication system of FIG. 1 in accordance with the present invention.
FIG. 5 is a flowchart of an operation performed by a responder included in the portable messaging unit of FIG. 4 in accordance with the present invention.

### Description of a Preferred Embodiment

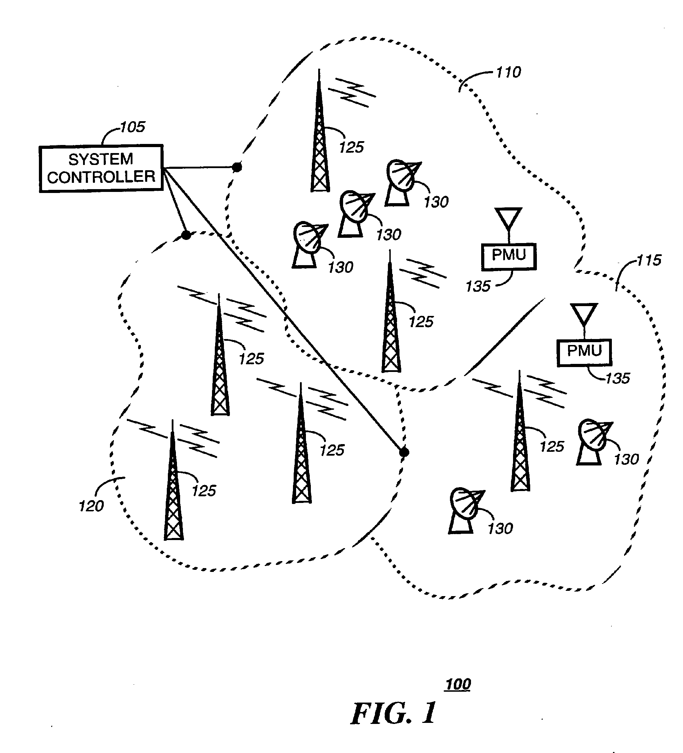

FIG. 1 is a block diagram of a radio communication system 100 that provides outbound communications, such as messages having corresponding sequential message numbers, to portable messaging units (PMUs) 135 over an outbound, or forward, communication channel. Inbound communications, such as registration requests or message acknowledgments, can be transmitted by the PMUs 135 over an inbound, or reverse, communication channel. The communication system 100 comprises different geographic regions of service referred to as zones 110, 115, 120, and each zone includes one or more transmitters 125 for transmitting the outbound messages. Two-way zones 110, 115, i.e., zones that support inbound communications, also include receivers 130 for receiving the inbound communications. One-way zones, such as zone 120, support only outbound communications and therefore need not include system receivers. A system controller 105 is coupled to stationary system devices, e.g., the transmitters 125 and the receivers 130 in the different zones 110, 115, 120, for controlling operations of the communication system 100 and managing transmissions within the system 100.

Two-way PMUs 135 preferably register in the respective zones in which they are located. Once a particular PMU 135 has registered, messages intended for the PMU 135 can be transmitted solely within the associated zone, rather than throughout the entire system 100. Additionally, inbound messages received from the PMU 135 registered in a two-way zone can be processed by the system controller 105. When two-way service for a PMU 135 is not supported, such as when the PMU 135 is outside the system 100, when the PMU 135 is outside the range of receivers 130 in a two-way zone, or when the PMU 135 is located in a one-way zone, inbound messages from the PMU 135 are not always processed or even received by the system controller 105, even though the PMU 135 can, in some instances, still generate an inbound message. As a result, message acknowledgments will often not be received by the system controller 105, and the controller 105 will not be able to tell which of the transmitted messages have been successfully received by the PMU 135.

In the communication system 100, messages provided to a PMU 135 are sequentially numbered. Therefore, the PMU 135 is conveniently able to determine whether it has missed any messages. For instance, when the PMU 135 has received and stored MESSAGE 1, MESSAGE 2, MESSAGE 4, and MESSAGE 5, the third message, i.e., MESSAGE 3, can be deemed a missed message after passage of some predetermined time. In response to successful reception of a message, the PMU 135 provides a message acknowledgment indicating to the system controller 105 that the particular message has been received. The system controller 105 is then aware that the acknowledged message need not be redelivered to the PMU 135.

Unacknowledged messages, though, still could have been successfully received by the PMU 135, since the PMU 135 could simply be operating in a one-way mode, i.e., operating in an area where or at a time when two-way service is not supported. Consequently, when the system controller 105 has transmitted messages that have not been acknowledged by the PMU 135, a reconciliation process is performed once the PMU 135 is again capable of providing inbound communications that are recognized and processed by the system controller 105. The system controller 105 recognizes that a PMU 135 is once again available for two-way communication when, for instance, a registration request, an acknowledgment, or any other inbound communication is received from the PMU 135.

According to the present invention, the communication system 100 provides an efficient message reconciliation process in which system resources are not needlessly wasted. Specifically, when a previously "absent" PMU 135, i.e., a PMU 135 which has been unavailable for two-way communication, is again located in a two-way zone, and messages for that PMU 135 remain unacknowledged, the system controller 105 reviews the message numbers associated with the unacknowledged message and selects only the highest message number. A missed message query comprising the highest message number is then provided by the system controller 105 to transmitters 125 included in the zone where the PMU 135 is located. In response to receiving the query transmitted by the transmitters 125, the PMU 135 determines whether it is missing any messages having numbers that are equal to or less than the highest message number included in the query. This can be done, for example, by reviewing a database in which the PMU 135 has stored received messages and the message numbers corresponding thereto. The PMU 135 responds to the query by transmitting message numbers of any missed messages to system receivers 130 for forwarding to the system controller 105.

It will be appreciated that the message number included in the query does not necessarily have to correspond to an unacknowledged message. Instead, the system controller 105 can elicit the same response from the PMU 135 by providing any message number that is greater than the highest numbered unacknowledged message, since the PMU 135 then returns only message numbers that are less than or equal to the received number and that correspond to missed messages.

When, because of channel capacity or other resource allocations, inbound messages are limited in size, it is possible that the number of missed messages could be too great to transmit in a single inbound response. In this case, the PMU 135 can, for instance, include the maximum allowed amount of message numbers and a flag to indicate that more messages are missing. The PMU 135 can list the missed messages from highest number to lowest number so that the system can query for further missed messages by using, in the query, a message number that is lower than the lowest number included in the response from the PMU 135. Additional mechanisms could alternatively be used to shorten the response from the PMU 135. For example, a missed message number may be accompanied by a flag indicating that the previous (or following) message is also missing.

In this manner, the reconciliation process can be performed with a single, short outbound query including a single message number, i.e., the highest message number corresponding to any unacknowledged messages, followed by a response that includes message numbers of all messages missed by the PMU 135. The system controller 105 can then advantageously retransmit only those messages that have actually been missed, thereby efficiently using the forward and reverse channels.

Conversely, prior art communication systems deplete system resources to a greater extent. In one conventional system, every unacknowledged message is retransmitted to a PMU that has reentered a two-way zone without first determining which messages have actually been missed. As a result, the outbound channel is unnecessarily crowded. In another prior art system, a system controller sends a separate outbound query for each unacknowledged message, and the PMU responds separately to each separately received query. It will be appreciated by one of ordinary skill in the art that these prior art reconciliation methods require a much greater number of inbound and outbound communications than does the system 100 according to the present invention.

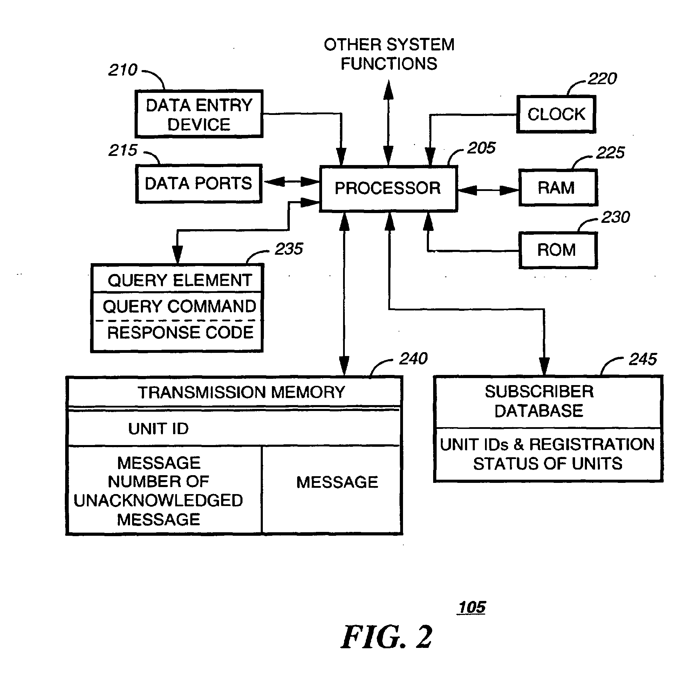

Referring next to FIG. 2, an electrical block diagram of the system controller 105 is depicted. The system controller 105 comprises data ports 215 for coupling to the transmitters 125 (FIG. 1) and the receivers 130 of the different zones 110, 115, 120 and a processor 205 for processing received information and information to be transmitted. The processor 205 also interfaces with other system functions that are well known to one of ordinary skill in the art.

The system controller 105 further comprises a data entry device 210 for receiving data, a clock 220 for providing time values used in system operations, a random access memory (RAM) 225 for storing variables derived in system operations, and a read only memory (ROM) 230 for storing system parameters. A subscriber database 245 is coupled to the processor 205 for storing subscriber information, such as unit identification information, e.g., addresses, and registration status of the PMUs 135. Preferably, the registration status for each PMU 135 indicates whether the PMU 135 is registered or unregistered and, when registered, the zone in which the PMU 135 is located. A transmission memory 240 stores, for each PMU 135, transmitted messages and the message numbers corresponding thereto. According to the present invention, acknowledged messages could be deleted from the transmission memory 240, leaving only unacknowledged messages in storage, since the acknowledged messages have been properly received by the recipient PMU 135. However, if desired, acknowledged messages can continue to be stored in the transmission memory 240 for some period of time without departing from the scope of the present invention. The transmission memory 240 could also store additional message information, such as transmission time and/or expected time of acknowledgment associated with the message.

The system controller 205 additionally includes a query element 235 for efficiently querying a PMU 135 that has resumed two-way operations. This is done by sending the highest message number of message numbers corresponding to messages unacknowledged by the intended recipient PMU 135. The query element 235 preferably stores a query command for generating a missed message query and a response code for recognizing a response from a PMU 135. Preferably, the query element 235 comprises firmware stored in the ROM 230 and executed by the processor 205. Alternatively, the query element 235 can be implemented by hardware capable of performing equivalent operations.

When, for instance, MESSAGE 1 through MESSAGE 11 have been sent to a PMU 135, and the transmission memory 240 indicates that MESSAGE 2, MESSAGE 3, and MESSAGE 10 have not been acknowledged within a specified amount of time, the query element 235 sends a query comprising the query command, i.e., a predetermined "query" code, and the number "10", which is indicative of the unacknowledged message having the highest number. It will be appreciated that the number "11" could alternatively be provided, since that number is higher than the highest numbered unacknowledged message. No other message numbers need be sent by the system controller 105 to that PMU 135. The PMU 135 preferably sends a response comprising the response code, i.e., another predetermined code, and message numbers that correspond to missed messages and that are equal to or greater than the number sent in the query. For example, when the PMU 135 successfully received MESSAGE 3 but missed MESSAGE 2 and MESSAGE 10, the response would include the response code and the numbers "2" and "10", thereby indicating all of the missed messages in a single inbound communication. It can be seen that the response of the PMU 135 is the same whether the number "10" or the number "11" was sent in the query.

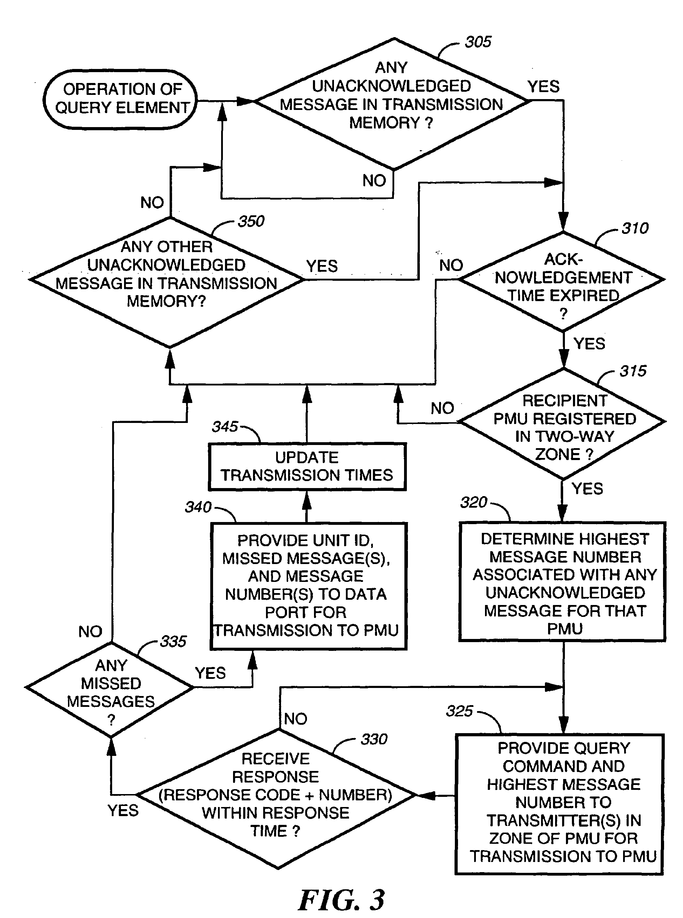

FIG. 3 is a flowchart illustrating an operation of the query element 235. When, at step 305, an unacknowledged message is stored in the transmission memory 240 and when, at step 310, sufficient time has passed so that the message should have been acknowledged, the query element 235 further determines, at step 315, whether the recipient PMU 135 is currently registered in a two-way zone. When, at step 315, two-way communications are supported for the PMU 135, the query element 235 references the transmission memory 240 to determine, at step 320, the highest number of message numbers corresponding to unacknowledged messages for that PMU 135. Next, at step 325, the query command and the highest message number, which together form a missed message query, are provided to the data ports 215 for forwarding to the appropriate zone transmitters 125, which subsequently transmit the query to the PMU 135.

When, at step 330, no response is received from the PMU 135 within a programmed response time, e.g., five minutes, additional queries are generated, at step 325. When additional queries have also been sent without response, the message reconciliation process could be terminated, and a conventional search command or "where are you" transmission could be sent in an attempt to locate the PMU 135. When the PMU 135 cannot be located, the registration status in the subscriber database 245 could be updated to indicate that the PMU 135 is unregistered, i.e., the PMU 135 is currently operating in a one-way mode.

When, at step 330, a response is received, the query element 235 determines, at step 335, whether the response indicates any missed messages. When, for instance, one or more message numbers equal to or less than the number provided in the query are included in the response, messages have been missed by the PMU 135. The fact that no messages have been missed could be conveyed, for example, by transmission of a predetermined code indicative of no missed messages or by transmission of any other information that is inconsistent with missed messages, such as transmission of a number higher than that provided in the query.

When, at step 335, the response is indicative of missed messages, the unit identification information (unit ID), the missed messages, and the numbers corresponding thereto are provided, at step 340, to the data ports 215 for subsequent retransmission to the PMU 135. The transmission memory 240 could then, at step 345, be updated to reflect the more recent transmission times for the missed messages. Once any missed messages have been retransmitted, the query element 235 determines, at step 350, whether any other unacknowledged messages are stored in the transmission memory 240, and, when so, processing continues at step 310. The query element 235 also determines whether other unacknowledged messages are stored when the PMU's response, at step 335, indicates that it has missed no messages or when, at steps 310, 315, generation of a query related to a first unacknowledged message is inappropriate. When, for example, a message is unacknowledged but the PMU 135 is currently registered in a one-way zone, message reconciliation is not appropriate because two-way communication is not supported, i.e., the PMU 135 is unable to send an inbound response.

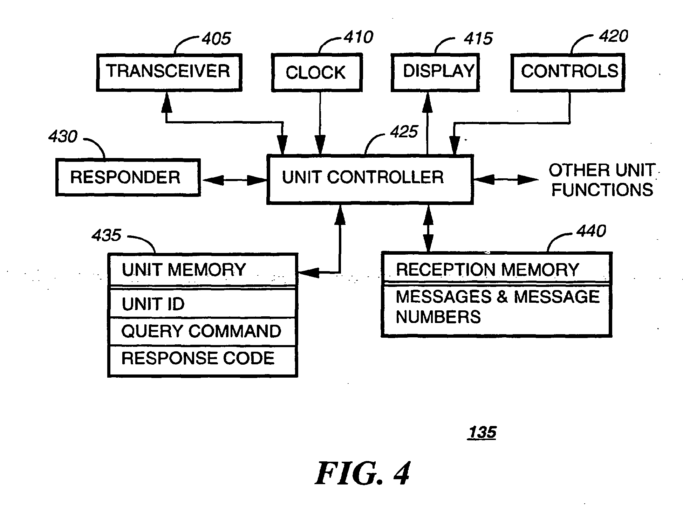

FIG. 4 is an electrical block diagram of the PMU 135, which includes a transceiver 405 for sending and receiving information, a unit controller 425 for controlling PMU operations, a clock 410 for providing time values, a display 415 for displaying received messages, and controls 420 for providing user inputs to the unit controller 425. Other unit functions can also be controlled by the unit controller 425. The PMU 135 includes a reception memory 440 for storing messages that have been properly received and decoded and for storing message numbers associated with the stored messages. A unit memory 435 stores the unit ID, the query command used in recognizing received missed message queries, and the response code used in generating responses to missed message queries.

The PMU 135 also includes a responder 430 for processing and responding to missed message queries by transmitting message numbers of missed messages in a single inbound transmission. The responder 430 is preferably implemented in firmware stored in the unit memory 435 and executed by the unit controller 425, but can alternatively be implemented using hardware capable of performing equivalent operations.

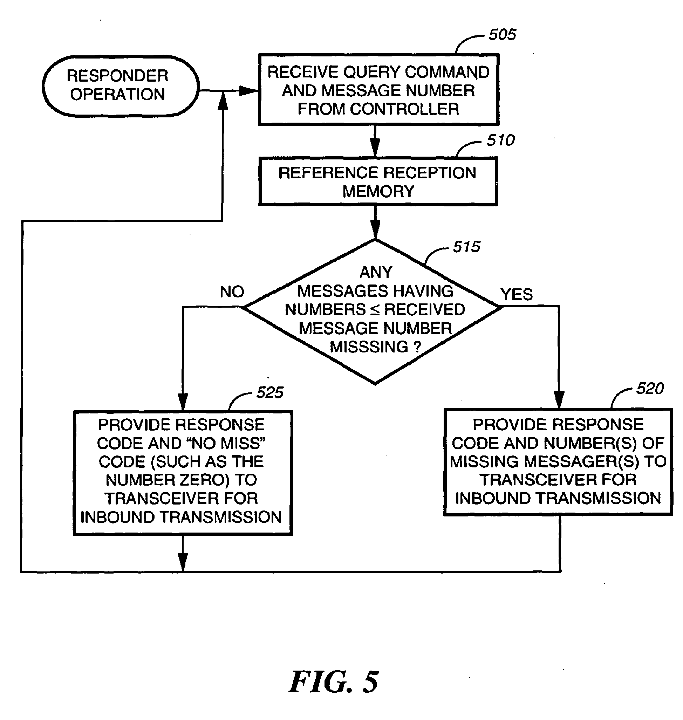

Referring next to FIG. 5, a flowchart of an operation of the responder 430 is shown. The responder 430, at step 505, receives a query command and a message number from the unit controller 425, in response to which the reception memory 440 is referenced, at step 510. Thereafter, at step 515, the responder 430 determines whether any sequential message numbers less than or equal to the query message number are missing from the reception memory 440. Missing message numbers are indicative of missed messages. When, for instance, the reception memory 440 stores MESSAGE 1, MESSAGE 2, and MESSAGE 3, and the query message number is "5", the responder 430 determines that MESSAGE 4 and MESSAGE 5 have been missed. When, on the other hand, the query message number is "3", the responder 430 determines that none of the transmitted messages have been missed.

When messages have been missed, a "missed message" response is generated, at step 520. Specifically, the response code and the numbers corresponding to the missed messages are provided, at step 520, to the transceiver 405 for inbound transmission over the reverse channel. When no messages have been missed, a "no miss" response is generated, at step 525, by providing the response code and a predetermined code indicative of no misses to the transceiver 405.

In summary, the communication system described above includes a system controller that controls operations of devices in different system zones. A PMU included in the system can roam among the zones and can, in most circumstances, operate in a two-way mode to send inbound messages, e.g., message acknowledgments, to the system controller. A one-way mode is also supported in which the PMU receives outbound messages but does not generate recognizable inbound messages.

When an outbound message is sent to the PMU but a message acknowledgment is not received, the system controller does not know whether or not the unacknowledged message has been successfully received by the PMU. Therefore, when the PMU is once again available for two-way communications, a message reconciliation process occurs.

According to the present invention, the system controller checks whether messages previously transmitted to the PMU remain unacknowledged after a sufficient amount of time, i.e., an acknowledgment time. When so, the system controller determines whether the PMU is currently registered in a two-way zone. When the PMU is registered for two-way communication, the system controller retrieves the highest message number associated with the unacknowledged messages and provides only this highest message number to the PMU in the form of a missed message query. Alternatively, the system controller can provide a message number that is higher than the highest numbered unacknowledged message. In this manner, querying for all missed messages for a particular PMU requires only a single outbound transmission that contains very little information, i.e., a command indicating that the communication is a missed message query and a single message number.

In response to the query, the PMU reviews all of its stored messages to determine whether there are any gaps in the messages, which have been transmitted using sequential message numbers. Specifically, the PMU determines whether any message numbers less than or equal to the query message number are missing, indicating missed messages. The PMU then responds by sending a response code, which indicates that the inbound transmission is a response to a missed message query, and numbers of any missed messages. When no messages are missing, a predetermined code can be provided to so indicate. In this way, the inbound channel is efficiently utilized because numbers of all missed messages are provided in a single inbound transmission. Thereafter, only the messages that have been identified as missed messages are retransmitted to the PMU over the forward channel.

In prior art systems, on the other hand, system resources are inefficiently used because either missed message queries are wastefully sent out separately for each and every unacknowledged message or all unacknowledged messages are automatically provided without querying to see whether the messages have actually been missed. When missed message queries are separately sent for each individual unacknowledged message, the inbound channel is also needlessly crowded because each query results in a separately transmitted response. The communication system according to the present invention better allocates system resources, so that channel crowding and resulting delays are minimized.

Thus, it will be appreciated by now that there has been provided a more efficient way to query for missed messages in a radio communication system.

## Claims

1. A portable messaging unit (PMU) for receiving messages having sequential message numbers, the PMU comprising:
a transceiver that is adapted to receive a query comprising a message number; and
a responder that is adapted to receive the message number from the transceiver, to determine whether any messages having numbers equal to or less than the message number have been missed, and to provide a response indicative of any missed messages to the transceiver for transmission from the PMU.

2. The PMU of claim 1, further comprising:
a reception memory, coupled to the responder, that is adapted to store the messages received by the PMU, wherein the responder references the reception memory to determine whether any of the messages have been missed.

3. The PMU of claim 2, further comprising:
a unit memory for storing a query command for recognizing the query and a response code for generating the response.

4. The PMU of claim 3, wherein, when any of the messages have been missed, the response provided to the transceiver comprises the response code and numbers associated with the missed messages.

5. A system controller for querying for missed messages in a radio communication system in which a portable message unit (PMU) operates, the system controller comprising:
data ports that is adapted to provide messages having sequential message numbers to transmitters for transmission to the PMU and to receive message acknowledgments transmitted by the PMU;
a transmission memory that is adapted to store transmitted messages and numbers associated therewith;
a query element, coupled to the transmission memory, that is adapted to determine whether any unacknowledged messages previously transmitted to the PMU are stored in the transmission memory and that is adapted to further determine, when at least one unacknowledged message is stored, a highest message number corresponding to the at least one unacknowledged message; and
a processor coupled to the query element and the data ports for providing a query for transmission to the PMU, the query comprising the highest message number.

6. The system controller of claim 5, further comprising:
a subscriber database that is adapted to store a registration status for the PMU indicating whether the PMU is registered in a two-way zone of the radio communication system, wherein the query is provided to the data ports only when the PMU is registered in the two-way zone.

7. The system controller of claim 6, wherein the query element stores a query command for generating the query and a response code for recognizing a response from the PMU.

8. The system controller of claim 7, wherein the response comprises the response code and further comprises:
message numbers equal to or less than the highest message number provided in the query when the PMU has missed any of the messages, wherein the message numbers correspond to missed messages; and
a predetermined code indicative of no missed messages when the PMU has not missed any of the messages.

9. A communication system for querying for missed messages, the communication system comprising:
a system controller that is adapted to manage transmission of messages having sequential message numbers, to determine whether any transmitted messages comprise unacknowledged messages, and that is adapted to generate a query comprising a highest message number associated with the unacknowledged messages; and
a portable messaging unit (PMU), adapted to receive the messages, to acknowledge received messages, to determine, in response to receiving the query, whether any of the messages having numbers equal to or less than the highest message number have been missed, and that is adapted to provide a response indicative of any missed messages to the system controller.

10. A method for querying for missed messages in a communication system comprising a system controller for managing communications in the communication system and a portable messaging unit (PMU) for communicating within the communication system, the method comprising, in the system controller, the steps of:
managing transmission of messages having sequential message numbers to the PMU;
determining whether any transmitted messages comprise unacknowledged messages, wherein the unacknowledged messages include messages for which acknowledgments have not been provided by the PMU;
determining, when there is at least one unacknowledged message, a highest message number corresponding to the at least one unacknowledged message; and
generating a query for transmission to the PMU, the query comprising the highest message number.

11. The method of claim 10, further comprising, in the PMU, the steps of:
receiving the query including the highest message number;
determining whether any of the messages having numbers equal to or less than the highest message number have been missed; and
transmitting, when any of the messages have been missed, a response indicative of message numbers of missed messages for processing by the system controller.

## Patentansprüche

1. Tragbare Nachrichteneinheit bzw. PMU zum Empfang von Nachrichten mit sequentiellen Nachrichtennummern, wobei die PMU Folgendes aufweist:
einen Transceiver, welcher zum Empfang einer eine Nachrichtennummer aufweisenden Suchanfrage ausgelegt ist;
einen Responder bzw. Antwortsender, welcher zum Empfang der Nachrichtennummer von dem Transceiver, zur Feststellung ob irgendwelche Nachrichten, die Nummern aufweisen, die gleich der oder kleiner als die Nachrichtennummer sind, verpasst wurden, und zur Bereitstellung einer Antwort, die jegliche verpassten Nachrichten angibt, an den Transceiver zur Übertragung von der PMU, ausgelegt ist.

2. PMU nach Anspruch 1, welche des weiteren Folgendes aufweist:
einen mit dem Responder gekoppelten Empfangsspeicher, welcher derart ausgelegt ist, dass er die von der PMU empfangenen Nachrichten speichert, wobei der Responder Bezug nimmt auf den Empfangsspeicher, um zu bestimmen, ob irgendeine der Nachrichten verpasst wurde.

3. PMU nach Anspruch 2, welche des Weiteren Folgendes aufweist:
einen Einheitenspeicher zum Speichern einer Aufforderung nach einer Suchanfrage zum Erkennen der Suchanfrage und eines Antwortcodes zur Erzeugung der Antwort.

4. PMU nach Anspruch 3, **dadurch gekennzeichnet, dass**, wenn irgendeine der Nachrichten verpasst wurde, die dem Transceiver bereitgestellte Antwort den Antwortcode und die Nummern, die mit den verpassten Nachrichten verbunden sind, aufweist.

5. Systemsteuerung zum Abfragen von verpassten Nachrichten in einem Funkkommunikationssystem, in dem eine tragbare Nachrichteneinnheit bzw. PMU arbeitet, wobei die Systemsteuerung Folgendes aufweist:
Daten-Ports, welche derart ausgelegt sind, dass sie Sendern Nachrichten mit sequentiellen Nachrichtennummern zum Senden an die PMU bereitstellen und von der PMU gesendete Nachrichtenbestätigungen empfangen;
einen Sendespeicher, welcher zum Speichern von gesendeten Nachrichten und damit verbundenen Nummern ausgelegt ist;
ein mit dem Sendespeicher gekoppeltes Suchanfrageelement, welches feststellt, ob irgendwelche nicht bestätigten Nachrichten, die kürzlich an die PMU gesendet wurden, in dem Sendespeicher gespeichert sind, und welches des Weiteren, wenn mindestens eine nicht bestätigte Nachricht gespeichert ist, die höchste der mindestens einen nicht bestätigten Nachricht entsprechende Nachrichtennummer feststellt; und
einen Prozessor, welcher mit dem Suchanfrageelement und den Daten-Ports gekoppelt ist, um eine Suchanfrage zur Übertragung an die PMU bereitzustellen, wobei die Suchanfrage die höchste Nachrichtennummer aufweist.

6. Systemsteuerung nach Anspruch 5, welche des Weiteren Folgendes aufweist:
eine Teilnehmerdatenbank, welche derart ausgelegt ist, dass sie einen Registrierungsstatus für die PMU speichert, der angibt, ob die PMU in einer Zweiwege-Zone des Funkkommunikationssystems registriert ist, wobei die Suchanfrage den Daten-Ports nur dann bereitgestellt wird, wenn die PMU in der Zweiwege-Zone registriert ist.

7. Systemsteuerung nach Anspruch 6, **dadurch gekennzeichnet, dass** das Suchanfrageelement eine Aufforderung nach einer Suchanfrage speichert, um die Suchanfrage und einen Antwortcode zum Erkennen einer Antwort von der PMU erzeugen.

8. Systemsteuerung nach Anspruch 7, **dadurch gekennzeichnet, dass** die Antwort den Antwortcode aufweist und des Weiteren Folgendes aufweist:
Nachrichtennummern, die gleich der oder kleiner als die höchste in der Suchanfrage bereitgestellten Nachrichtennummer sind, wenn die PMU irgendeine der Nachrichten verpasst hat, wobei die Nachrichtennummern verpassten Nachrichten entsprechen; und
einen vorher festgelegten Code, der keine verpassten Nachrichten angibt, wenn die PMU keine der Nachrichten verpasst hat.

9. Kommunikationssystem zur Abfrage von verpassten Nachrichten, wobei das Kommunikationssystem Folgendes aufweist:
eine Systemsteuerung, die derart ausgelegt ist, dass sie Übertragungen von Nachrichten mit sequentiellen Nachrichtennummern verwaltet, feststellt, ob irgendeine übertragene Nachrichten nicht bestätigte Nachrichten aufweist, und derart ausgelegt ist, dass sie eine Suchanfrage erzeugt, die eine den nicht bestätigten Nachrichten zugeordnete höchste Nachrichtennummer aufweist; und
eine tragbare Nachrichteneinheit bzw. PMU, die derart ausgelegt ist, dass sie Nachrichten empfängt, empfangene Nachrichten bestätigt, ansprechend auf den Empfang einer Suchanfrage feststellt, ob irgendwelche Nachrichten, die Nummern aufweisen, die gleich der oder kleiner als die höchste Nachrichtennummer sind, verpasst wurden, und derart ausgelegt ist, dass sie der Systemsteuerung eine Antwort bereitstellt, die jegliche verpassten Nachrichten angibt.

10. Verfahren zur Abfrage von verpassten Nachrichten in einem Kommunikationssystem, welches eine Systemsteuerung zur Verwaltung von Kommunikationen in dem Kommunikationssystem sowie eine tragbare Nachrichteneinheit (PMU) zur Kommunikation mit dem Kommunikationssystem aufweist, wobei das Verfahren in der Systemsteuerung die folgenden Schritte umfasst:
Verwaltung von Übertragungen von Nachrichten mit sequentiellen Nachrichtennummern an die PMU;
Feststellung, ob irgendwelche übertragenen Nachrichten nicht bestätigte Nachrichten enthalten, wobei die nicht bestätigten Nachrichten Nachrichten aufweisen, für die keine Bestätigungen durch die PMU bereitgestellt wurden;
Feststellung, wenn es mindestens eine nicht bestätigte Nachricht gibt, einer höchsten Nachrichtennummer, die der mindestens einen nicht bestätigten Nachricht entspricht; und
Erzeugung einer Suchanfrage zur Übertragung an die PMU, wobei die Suchanfrage die höchste Nachrichtennummer aufweist.

11. Verfahren nach Anspruch 10, welches in der PMU des Weiteren die folgenden Schritte umfasst:
Empfang der Suchanfrage einschließlich der höchsten Nachrichtennummer;
Feststellung, ob irgendeine der Nachrichten, die Nummern gleich der oder kleiner als die höchste Nachrichtennummer aufweisen, verpasst wurde; und
Übertragung, wenn irgendeine der Nachrichten verpasst wurde, einer Antwort, welche Nachrichtennummern von verpassten Nachrichten zur Verarbeitung durch die Systemsteuerung angibt.

## Revendications

1. Unité de messagerie portable (PMU) destinée à recevoir des messages ayant des numéros de messages séquentiels, la PMU comprenant:
un émetteur-récepteur qui est adapté pour recevoir une interrogation comprenant un numéro de message; et
un répondeur qui est adapté pour recevoir le numéro de message de l'émetteur-récepteur pour déterminer si des messages quelconques ayant des numéros égaux ou inférieurs au numéro de message manquent et pour fournir une réponse indicative de messages manquants quelconques à l'émetteur-récepteur pour transmission de la PMU.

2. La PMU selon la revendication 1, comprend en outre:
une mémoire de réception, couplée au répondeur, qui est adaptée pour mémoriser les messages reçus par la PMU, dans laquelle le répondeur référence la mémoire de réception pour déterminer si l'un quelconque des messages manque.

3. PMU selon la revendication 2, comprenant en outre:
une mémoire unitaire destinée à mémoriser un ordre d'interrogation destiné à reconnaître l'interrogation et un code de réponse destiné à générer la réponse.

4. PMU selon la revendication 3, dans laquelle, lorsque l'un quelconque des messages manque, la réponse fournie à l'émetteur-récepteur comprend le code de réponse et les numéros associés aux messages manquants.

5. Unité de commande de système destinée à interroger les messages manquants dans un système de radiocommunication dans lequel une unité de message portable (PMU) fonctionne, l'unité de commande de système comprenant:
des ports d'accès qui sont adaptés pour fournir des messages ayant des numéros de messages séquentiels à des émetteurs pour transmission à la PMU et pour recevoir des accusés de réception de messages transmis par la PMU;
une mémoire de transmission qui est adaptée pour mémoriser les messages transmis et les numéros associés à ceux-ci;
un élément d'interrogation, couplé à la mémoire de transmission, qui est adapté pour déterminer si tout message n'ayant pas fait l'objet d'un accusé de réception préalablement transmis à la PMU est mémorisé dans la mémoire de transmission et qui est adapté pour déterminer en outre, lorsqu'au moins un message n'ayant pas fait l'objet d'un accusé de réception est mémorisé, un numéro de message le plus élevé correspondant à l'au moins un message n'ayant pas fait l'objet d'un accusé de réception; et
un processeur couplé à l'élément d'interrogation et aux ports d'accès pour fournir une interrogation pour transmission à la PMU, l'interrogation comprenant le numéro de message le plus élevé.

6. Unité de commande de système selon la revendication 5, comprenant en outre:
une base de données d'abonné qui est adaptée pour mémoriser un état d'enregistrement pour la PMU indiquant si la PMU est enregistrée dans une zone bidirectionnelle du système de radiocommunication, dans laquelle l'interrogation est fournie aux ports d'accès uniquement lorsque la PMU est enregistrée dans la zone bidirectionnelle.

7. Unité de commande de système selon la revendication 6, dans laquelle l'élément d'interrogation mémorise un ordre d'interrogation destiné à générer l'interrogation et un code de réponse destiné à reconnaître une réponse de la PMU.

8. Unité de commande de système selon la revendication 7, dans laquelle la réponse comprend le code de réponse et comprend en outre:
des numéros de messages égaux ou inférieurs au numéro de message le plus élevé fourni dans l'interrogation lorsque l'un quelconque des messages manque dans la PMU, dans laquelle les numéros de messages correspondent aux messages manquants; et
un code prédéterminé indicatif d'aucun message manquant lorsqu'aucun des messages ne manque dans la PMU.

9. Système de communication destiné à interroger les messages manquants, le système de communication comprenant:
une unité de commande de système qui est adaptée pour gérer la transmission de messages ayant des numéros de messages séquentiels, pour déterminer si des messages transmis quelconques comprennent des messages n'ayant pas fait l'objet d'un accusé de réception, et qui est adaptée pour générer une interrogation comprenant un numéro de message le plus élevé associé aux messages n'ayant pas fait l'objet d'un accusé de réception; et
une unité de messagerie portable (PMU) adaptée pour recevoir les messages, pour accuser de la réception des messages reçus, pour déterminer, en réponse à la réception de l'interrogation, si l'un quelconque des messages ayant des numéros égaux ou inférieurs au numéro de message le plus élevé manque, et qui est adaptée pour fournir une réponse indicative de tout message manquant à l'unité de commande de système.

10. Procédé d'interrogation des messages manquants dans un système de communication comprenant une unité de commande de système destinée à gérer les communications dans le système de communication et une unité de messagerie portable (PMU) destinée à communiquer au sein du système de communication, le procédé comprenant, dans l'unité de commande de système, les étapes consistant à:
gérer la transmission de messages ayant des numéros de messages séquentiels à la PMU;
déterminer si des messages transmis quelconques comprennent des messages n'ayant pas fait l'objet d'un accusé de réception, dans lequel les messages n'ayant pas fait l'objet d'un accusé de réception comprennent les messages pour lesquels des accusés de réception n'ont pas été fournis par la PMU;
déterminer, lorsqu'il existe au moins un message n'ayant pas fait l'objet d'un accusé de réception, un numéro de message le plus élevé correspondant à l'au moins un message n'ayant pas fait l'objet d'un accusé de réception; et
générer une interrogation pour transmission à la PMU, l'interrogation comprenant le numéro de message le plus élevé.

11. Procédé selon la revendication 10, comprenant en outre, dans la PMU, les étapes consistant à:
recevoir l'interrogation comprenant le numéro de message le plus élevé;
déterminer si l'un quelconque des messages ayant des numéros égaux ou inférieurs au numéro de message le plus élevé manque; et
transmettre, lorsque l'un quelconque des messages manque, une réponse indicative des numéros de messages des messages manquants pour traitement par l'unité de commande de système.
